# EUROPEAN PATENT SPECIFICATION

(11) **EP 3 163 785 B1**
(45) Date of publication and mention of the grant of the patent: **28.03.2018**
(21) Application number: 16195011.8
(22) Date of filing: 21.10.2016
(51) Int. Cl.: H04L 5/14, H04W 84/20, H04W 8/00, H04W 76/02

(54) **ELECTRONIC APPARATUS FOR WIRELESS COMMUNICATION AND CONTROL METHOD FOR THE SAME**
ELEKTRONISCHE VORRICHTUNG ZUR DRAHTLOSEN KOMMUNIKATION UND STEUERUNGSVERFAHREN DAFÜR
APPAREIL ÉLECTRONIQUE DE COMMUNICATION SANS FIL ET SON PROCÉDÉ DE COMMANDE

(30) Priority: 26.10.2015 KR 20150148448
(43) Date of publication of application: 03.05.2017
(73) Proprietor: Samsung Electronics Co., Ltd., Gyeonggi-do 16677 (KR)
(72) Inventor: LEE, Seung-Bok, Gyeonggi-do (KR); YANG, Geun Sam, Gyeonggi-do (KR)
(74) Representative: Walaski, Jan Filip

(56) References cited:
- US-A1- 2003 139 191
- US-A1- 2011 045 771
- US-A1- 2014 355 517

## Description

The present invention relates to an electronic apparatus capable of communicating with an external device and a control method for the same.

A display apparatus may include a display panel configured to display an image. For example, the display apparatus may include a television or a monitor.

The display apparatus may communicate with adjacent devices via a Bluetooth method, and provide an extended function to a user. For example, the display apparatus may perform the Bluetooth communication with devices, e.g. a key board, a mouse, and a remote control configured to receive an input of a control command by a user, a speaker configured to output a sound, a smart phone configured to transmit and receive a variety of data, a desktop, and a laptop.

In this case, the display apparatus may be operated as a master device, and the external devices may be operated as a slave device. The display apparatus, which is operated as the master device, may communicate with the external device in a connection state within a capacity that is transmittable per one frame, e.g., a bandwidth.

US2011/045771 discloses an electronic apparatus to perform wireless communication with at least one external device, in which a pre-communication is continued with when a bandwidth of a detected energy burst exceeds a specific bandwidth.

One or more exemplary embodiments provide an electronic apparatus capable of stopping a pre-communication for a connection to an external device when data transmission exceeds an available bandwidth, and a control method for the same.

Additional aspects of the present disclosure will be set forth in part in the description which follows and, in part, will be obvious from the description, or may be learned by practice of the disclosure.

According to an aspect the invention, there is provided an electronic apparatus according to claim 1.

The communication unit may divide the available bandwidth into a plurality of time slots, and assign the plurality of time slots to the he pre-communication and the data communication.

The communication unit may assign the plurality of time slots according to a packet type used in the second external device.

When at least a part of the pre-communication and the data communication is not assigned a time slot, the controller may control the communication unit to stop performing the at least one of the pre-communication and the data communication.

The controller may reassign a time slot, which is previously assigned to the at least one of the pre-communication and data communication, to the at least a part of the pre-communication and the data communication, which is not assigned the time slot.

The pre-communication may include at least one of sending an inquiry, scanning the inquiry, sending a page, scanning the page, and advertising, with respect to the first external device.

The controller may control the communication unit to stop performing at least a part of the pre-communication when the sum of the bandwidth to perform the pre-communication and the bandwidth to perform the data communication exceeds the available bandwidth.

The second external device may include a plurality of second external devices, and the controller may control the communication unit to stop performing the data communication with respect to at least one second external device among the plurality of second external devices when the sum of the bandwidth to perform the pre-communication and the bandwidth to perform the data communication exceeds the available bandwidth.

When the sum of the bandwidth to perform the pre-communication and the bandwidth to perform the data communication exceeds the available bandwidth, the controller may determine whether to stop performing the at least one of the pre-communication and the data communication based on a control command that is externally provided.

The electronic apparatus may further include a display configured to indicate that the at least one of the pre-communication and the data communication is stopped when the at least one of the pre-communication and the data communication is stopped.

According to another aspect of the invention, there is provided a control method of an electronic apparatus according to claim 9.

The performing the pre-communication and the data communication may include dividing the available bandwidth into a plurality of time slots and assigning the plurality of time slots to perform the pre-communication and the data communication.

The assigning may include assigning the plurality of time slots according to a packet type used in the second external device.

The controlling may further include controlling to stop performing the at least one of the pre-communication and the data communication when at least a part of the pre-communication and the data communication is not assigned a time slot.

The control method may further include reassigning, by using the at least one hardware processor, a time slot, which is previously assigned to the at least one of the pre-communication and data communication, to the at least a part of the communication and the data communication, which is not assigned the time slot.

The pre-communication may further include at least one of sending an inquiry, scanning the inquiry, sending a page, scanning the page, and advertising, with respect to the first external device.

The controlling may include controlling to stop performing at least a part of the pre-communication when the sum of the bandwidth to perform the pre-communication and the bandwidth to perform the data communication exceeds the available bandwidth.

The second external device may include a plurality of second external devices, and the controlling includes controlling to stop performing the data communication with respect to at least one second external device among the plurality of second external devices when the sum of the bandwidth to perform the pre-communication and the bandwidth to perform the data communication exceeds the available bandwidth.

The controlling may include, when the sum of the bandwidth to perform the pre-communication and the bandwidth to perform the data communication exceeds the available bandwidth, receiving an input of a control command related to whether to stop the at least one of the pre-communication and the data communication, and controlling to stop performing the at least one of the pre-communication and the data communication based on the input of the control command.

The control method may further include displaying that the at least one of the pre-communication and the data communication is stopped, when the at least one of the pre-communication and the data communication is stopped.

According to an aspect of an exemplary embodiment, there is provided an electronic apparatus including at least one hardware processor to implement: a communication unit configured to assign a plurality of time slots, of a bandwidth of a frame, to perform at least one of a pre-communication and a data communication with at least one first external device; and a controller configured to, in response to determining that a data communication with a second external device has a bandwidth greater than a bandwidth remaining after assigning the plurality of time slots, cancel at least a part of the plurality of assigned time slots and reassign a canceled time slot to perform the data communication with the second external device.

The communication unit may perform the at least one of the pre-communication with a first external device to be connected and the data communication with another first device that is connected.

The at least one first external device may include a plurality of first external devices, and the electronic apparatus further including: a user interface configured to receive a user input to select one of the plurality of first external devices of which assigned time slot is to be canceled and reassigned to the second external device.

The above and/or other aspects will become apparent and more readily appreciated from the following description of exemplary embodiments, taken in conjunction with the accompanying drawings, in which:
FIG. 1 is a control block diagram illustrating a master device in accordance with an exemplary embodiment;
FIG. 2 is a view illustrating a data transmission method of a communication unit in accordance with an exemplary embodiment;
FIGS. 3A and 3B are views illustrating examples in which an error may be generated during data transmission of a communication unit of FIG. 2;
FIG. 4 is a view illustrating an example in which a controller controls a communication unit in response to an error that may be generated in FIG. 3A;
FIGS. 5A and 5B are views illustrating a variety of examples in which a controller controls a communication unit in response to an error that may be generated in FIG. 3B;
FIGS. 6A and 6B are views illustrating examples in which a controller controls a communication unit in response to an error that may be generated in FIG. 3A;
FIG. 7 is a view illustrating a first user interface (UI) displayed on a display in accordance with an exemplary embodiment;
FIG. 8 is a view illustrating a second user interface (UI) displayed on a display in accordance with an exemplary embodiment;
FIG. 9 is a view illustrating an example of a third user interface (UI) displayed on a display in accordance with an exemplary embodiment;
FIG. 10 is a view illustrating an exterior of a display apparatus in accordance with an exemplary embodiment;
FIG. 11 is a flow chart illustrating a control method of a master device in accordance with an exemplary embodiment; and
FIG. 12 is a flow chart illustrating a control method of a master device in accordance with another exemplary embodiment.

Certain exemplary embodiments will now be described in detail with reference to the accompanying drawings, in which exemplary embodiments are shown.

According to an exemplary embodiment, an electronic apparatus may include all kinds of apparatuses configured to be operated by supplying power, and configured to communicate with at least one external device. In addition, according to an exemplary embodiment, an external device may include all kinds of devices configured to be operated by supplying a power, and configured to communicate with the electronic apparatus.

When the electronic apparatus and the at least one external device are in a connectable state or in a connection state, the electronic apparatus may be operated as a master device and the at least one external device may be operated as a slave device. However, this is merely an example and the exemplary embodiments are not limited thereto.

In addition, the electronic apparatus operated as the master device may be operated as a slave device in a relationship with another electronic apparatus.

Hereinafter, it is assumed that an electronic apparatus is operated as a master device and an external device is operated as a slave device.

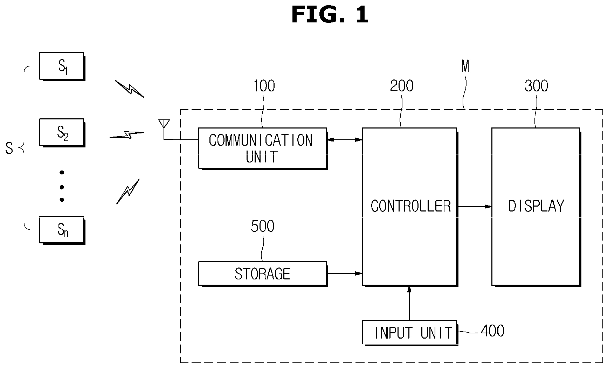

FIG. 1 is a control block diagram illustrating a master device in accordance with an exemplary embodiment.

Referring to FIG. 1, according to an exemplary embodiment, a master device (M) may include a communication unit 100 configured to perform a communication with a slave device (S); a storage 500 configured to store a variety of data used to perform the communication with the slave device (S); an input unit 400 configured to receive a control command by a user; a display 300 configured to provide a variety of information related to the communication with the slave device (S) and to provide a user interface (UI) ; and a controller 200 configured to control each component of the master device (M). The slave device (S) may include a plurality of slave devices S1, S2, ... Sn.

The communication unit 100 may be connected to at least one slave device (S) through a wireless method, and transmit and/or receive data to and/or from the slave device (S). The communication unit 100 may communicate with the at least one slave device (S) via various communication methods.

For example, the communication unit 100 may transmit and/or receive a wireless signal to and/or from the slave device (S) through a base station using a communication technology, e.g. 3 Generation (3G), 4 Generation (4G), and 5 Generation (5G). In addition, the communication unit 100 may transmit and/or receive a wireless signal including data to and/or from the slave device (S) in a certain distance using a communication technology, e.g. Wireless Local Area Network (LAN), Wi-Fi, Zigbee, Wi-Fi Direct (WFD), Ultra wideband (UWB), Infrared Data Association (IrDA), Near Field Communication (NFC).

In addition, the communication unit 100 may communicate with the at least one slave device (S) by using Bluetooth technology. In this case, the Bluetooth technology selected by the communication unit 100 may include Bluetooth Low Energy (BLE) technology.

Hereinafter, for convenience of description, it is assumed that the communication unit 100 performs a communication by using Bluetooth technology.

The communication unit 100 may be connected to at least one slave device (S) capable of performing a Bluetooth communication. For example, the communication unit 100 may be connected to the input unit 140 such as, for example, a key board, a mouse, a remote controller, that receives an input of a control command by a user, a speaker that outputs a sound, a smart phone, a desktop, and a laptop, that transmit and/or receive a variety of data, to allow Bluetooth communication.

The communication unit 100 may perform a pre-communication (Pr) with the at least one slave device (S) to enter a communicable state with the at least one slave device (S). "Pre-communication" may represent an operation in which the master device (M) and the slave device (S) match an operation clock and a frequency pattern with each other.

According to an exemplary embodiment, the communication unit 100 may perform an operation to inquire about and search for a slave device (S) that is placed adjacent to the master device (M). For example, the communication unit 100 may repeatedly send an inquiry message including an operation frequency of the master device (M) to the slave device(S) in the surroundings so that the slave device (S) matches a frequency pattern with that of the master device (M). The slave device (S) may scan the inquiry messages and detect the operation frequency of the master device (M) included in the inquiry message, and synchronize the frequency pattern of the slave device (S) to the detected frequency. The slave device (S) synchronized to the operation frequency may transmit an inquiry response message including an address of the slave device (S) to the master device (M).

When the inquiry response message is received, the communication unit 100 may transmit a page message to a desired slave device among the slave devices (S) that transmit the inquiry response messages. In this time, the page message may include a clock signal of the master device (M) so that the slave device (S) is synchronized to an operation clock of the master device (M). The slave device (S) may scan the page message, detect the operation clock of the master device (M) included in the page message, and synchronize a clock of the slave device (S) to the detected clock.

A network in which the at least one slave device (S) is connected to the master device (M) through the above processes may be referred to as "piconet".

When the piconet is formed, the communication unit 100 may communicate with an external device in a connection state within a capacity that is transmittable per one frame, i.e. a bandwidth. For example, the communication unit 100 may divide a single frame (e.g., one second) into 1600 time slots and change a frequency channel through a hopping that is performed 1600 times per one frame, thereby communicating with the at least one slave device (S). The communication unit 100 may change a frequency channel according to a pre-determined hopping sequence and the slave device (S), which is synchronized to the frequency and the clock of the master device (M), may receive data from the communication unit 100.

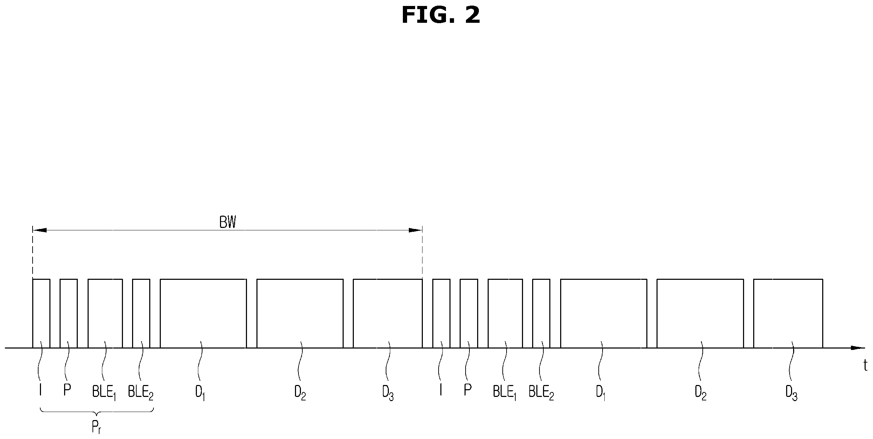

FIG. 2 is a view illustrating a data transmission method of the communication unit in accordance with an exemplary embodiment. FIG. 2 illustrates an example of a data transmission method by using a transmission bandwidth of the communication unit 100.

As mentioned above, the communication unit 100 may change a frequency channel by performing a hopping 1600 times per one second, and use one time slot when performing a hopping. Therefore, a time slot of 0.625 ms (that is, 1/1600 second) may be used to perform a hopping.

The communication unit 100 may assign a time slot according to a packet type used in the slave device (S) in a connection state. For example, when the slave device (S) according to a Human interface device (HID) profile employs a DMi packet type having a period of 10 ms, the communication unit 100 may assign two time slots (e.g., corresponding to a period of 1.25 ms) to perform a communication with the slave device (S). In this case, a bandwidth occupancy rate of the slave device (S) may become 12.5 % (that is, 1.25 ms/10 ms × 100).

As mentioned above, the at least one slave device (S) connected to the communication unit 100 may have a bandwidth occupancy rate corresponding to the packet type of the slave device (S).

FIG. 2 illustrates three time slots D1, D2, and D that are occupied by three slave devices S1, S2, and S3, respectively. Particularly, FIG. 2 illustrates an example in which the slave device S1 occupies D1 that is 25 % of an entire bandwidth BW, the slave device S2 occupies D2 that is 25 % of the entire bandwidth BW, and the slave device S3 occupies D3 that is 20 % of the entire bandwidth BW.

In addition, the communication unit 100 may assign a certain time slot in the bandwidth for the above mentioned pre-communication (Pr). That is, the communication unit 100 may perform the pre-communication (Pr) for a slave device (S) in a connectable state, and when the master device (M) and the slave device (S) are connected, communicate with the slave device (S) in the connection state in a single frame.

Referring to FIG. 2, the communication unit 100 may assign a time slot (I) that is 5 % of the entire bandwidth, to send the inquiry message to the slave device (S), and assign a time slot (P) that is 5 % of the entire bandwidth, to transmit the page message from the slave device (S). In the time slot (I) that is 5 % of the entire bandwidth, the communication unit 100, as a master device (M), transmits the inquiry message to the slave device (S), and as a slave device (S) in a relationship with another master device (M), scans an inquiry message from the another master device (M). In addition, in the time slot (P) that is 5 % of the entire bandwidth, the communication unit 100, as a master device (M), transmits the page message to the slave device (S), and as a slave device (S) in a relationship with another master device (M), scans a page message from the another master device (M).

In addition, the communication unit 100 may assign a time slot BLE1 that is 10 % of the entire bandwidth to perform Bluetooth Low Energy (BLE) scan in a pre-communication (Pr) of a BLE communication, and assign a time slot BLE2 that is 5 % of the entire bandwidth to perform BLE advertisement.

As a result, 95 % time slot of the entire bandwidth may be occupied as illustrated in FIG. 2, and the communication unit 100 may normally communicate with three slave devices (S).

However, in a case where a data transmission bandwidth exceeds the available bandwidth (e.g., remaining time slot of the bandwidth of the communication unit 100), the communication unit 100 may not normally perform the communication. In other words, when a data transmission causes the bandwidth occupancy rate to be greater than 100 %, the communication unit 100 may generate an error. Accordingly, there may be "buffering" in the slave device (S) connected to the communication unit 100.

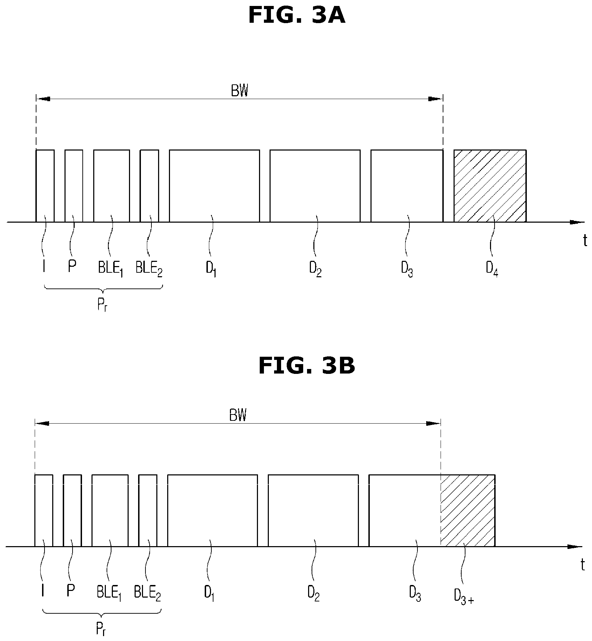

FIGS. 3A and 3B are views illustrating examples in which an error may be generated during data transmission of the communication unit of FIG. 2.

The communication unit 100 of FIG. 2 may be additionally connected to a slave device S4 as well as the slave devices S1 to S3. As illustrated in FIG. 3A, when a time slot D4, which is 20 % of the entire bandwidth, is occupied according to a packet type employed by the slave device S4, the entire bandwidth occupancy rate may become 115 %. Therefore, in this case, since the data transmission of which bandwidth exceeds the available bandwidth is performed, an error may occur.

On the other hand, when a communication environment between the communication unit 100 of FIG. 2 and the slave device S3 is unstable due to the interference of the signal, an additional time slot may be occupied to perform data retransmission. As illustrated in FIG. 3B, when a time slot D3+ that is 10% of the entire bandwidth is assigned to the slave device S3 to perform the data retransmission, in addition to the time slot D3 that is 20 % of the entire bandwidth and occupied by the slave device S3, the entire bandwidth occupancy rate may become 105 %. Therefore, in this case, since the data transmission of which bandwidth exceeds the available bandwidth is performed, an error may occur.

Therefore, when the data transmission bandwidth exceeding the available bandwidth of the communication unit 100 is performed, the efficient management of the bandwidth may be needed so that the communication is normally performed.

To this end, when the data transmission of which bandwidth exceeds the available bandwidth is performed, the controller 200 may control the communication unit 100 so that the communication unit 100 stops the above mentioned pre-communication (Pr).

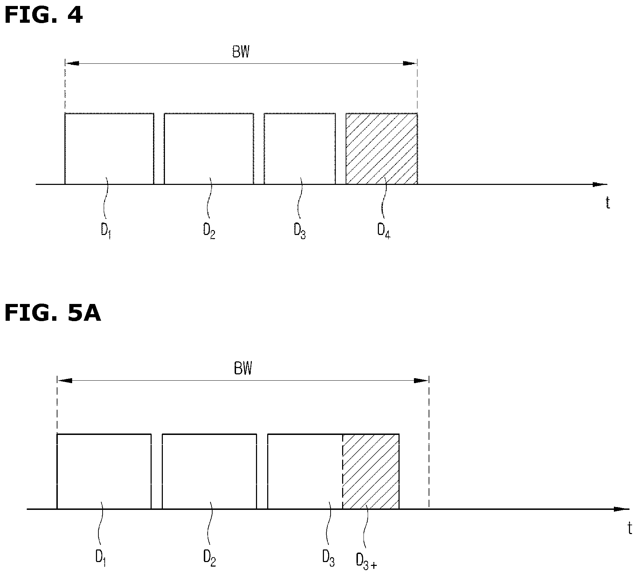

FIG. 4 is a view illustrating an example in which a controller controls the communication unit in response to an error generated in FIG. 3A.

As illustrated in FIG. 3A, when the data transmission of which bandwidth exceeds the available bandwidth is performed to connect the communication unit 100 to a plurality of slave devices, an error may occur. Therefore, the controller 200 may determine whether the data transmission of which bandwidth exceeds the available bandwidth is to be performed. To this end, the controller 200 may estimate a bandwidth occupancy rate based on a packet type selected by the slave device (S) in a connection state, and a data transmission period. Alternatively, the controller 200 may determine whether the data transmission of which bandwidth exceeds the available bandwidth is to be performed by determining whether the number of the slave device (S) is equal to or more than a threshold value. For example, the threshold value may be stored in the storage 500 in advance.

When it is determined that the data transmission of which bandwidth exceeds the available bandwidth is to be performed, the controller 200 may control the communication unit 100 so that the communication unit 100 stops performing the pre-communication (Pr) with an adjacent slave device (S) that is connectable.

For example, the controller 200 may stop performing the pre-communication (Pr) so that the time slot that is assigned to perform the pre-communication (Pr) may be cancelled. As a result, 25 % of the entire bandwidth may be additionally secured. As illustrated in FIG. 4, the communication unit 100 may assign a time slot D4 that is 20 % of the entire bandwidth, to perform the communication with the slave device S4. Accordingly, 90 % of the entire bandwidth may be occupied by the slave devices S11 to S4, and the communication unit 100 may be allowed to communicate with the slave devices S1 to S4 without buffering.

Although it is described above that the controller 200 controls to stop performing the pre-communication (Pr) when it is determined that the data transmission to be performed has a bandwidth that exceeds the available bandwidth, the exemplary embodiments are not limited thereto. For example, the controller 200 may control to stop performing the pre-communication (Pr) when it is determined that the data transmission to be performed has a bandwidth that has a certain percentage or more of the available bandwidth. Alternatively, the controller 200 may control to stop performing the pre-communication (Pr) when it is determined that the data transmission to be performed has a bandwidth that is equal to or greater than a threshold.

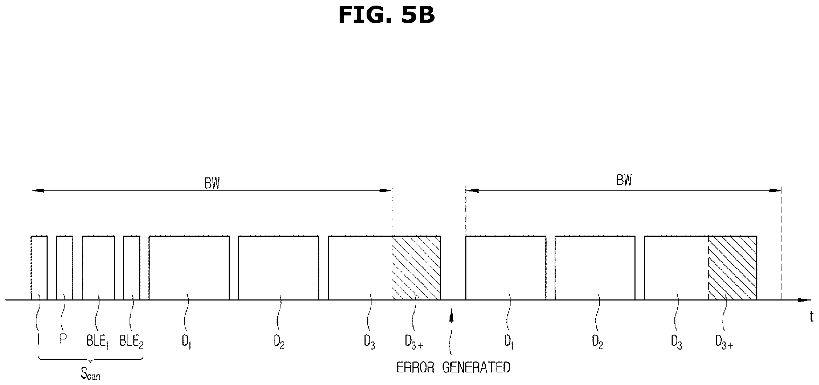

FIGS. 5A and 5B are views illustrating a variety of examples in which the controller controls the communication unit in response to an error that may be generated in FIG. 3B. As illustrated in FIG. 3B, when an additional time slot is assigned to perform the retransmission of the data, an error may occur. In this time, the controller 200 may control the communication unit 100 so that the communication unit 100 stops performing the pre-communication (Pr) with an adjacent slave device (S) that is connectable.

For example, the controller 200 may stop performing the pre-communication (Pr) so that the time slot that is assigned for the pre-communication (Pr) may be cancelled. As a result, 25 % of the entire bandwidth may be additionally secured. As illustrated in FIG. 5A, the communication unit 100 may assign a time slot D3+ that is 10 % of the entire bandwidth, to perform the data retransmission with the slave device S3. Accordingly, 80 % of the entire bandwidth may be occupied by the slave devices S1 to S3, and the communication unit 100 may be allowed to communicate with the slave devices S1 to S3 without buffering.

FIG. 5A illustrates that the controller 200 controls the communication unit 100 so that the pre-communication (Pr) is preemptively stopped before the error is generated. Alternatively, the controller 200 may stop the pre-communication (Pr) after the error is generated.

Referring to FIG. 5B, the communication unit 100 may perform the pre-communication (Pr) and the communication with the slave devices S1 to S3 in a single frame. When a data retransmission is to be performed with the slave device S3 due to a communication error, an error may occur since the data retransmission bandwidth exceeds the available bandwidth.

When the error is generated, the controller 200 may control the communication unit 100 so that the communication unit 100 may stop performing the pre-communication (Pr), and thus the communication unit 100 may normally perform the communication with the slave devices S1 to S3 in the next frame.

In the above, the exemplary embodiments in which the controller 200 controls the communication unit 100 so that the communication unit 100 stops performing the entire pre-communication (Pr) to avoid an error are illustrated. However, these are merely examples and the exemplary embodiments are not limited thereto. The controller 200 may efficiently manage the bandwidth in various other methods.

Although it is described above that the controller 200 controls to stop performing the pre-communication (Pr) when it is determined that the data retransmission has a bandwidth that exceeds the available bandwidth, the exemplary embodiments are not limited thereto. For example, the controller 200 may control to stop performing the pre-communication (Pr) when it is determined that the data retransmission has a bandwidth that has a certain percentage or more of the available bandwidth. Alternatively, the controller 200 may control to stop performing the pre-communication (Pr) when it is determined that the data retransmission has a bandwidth that is equal to or greater than a threshold.

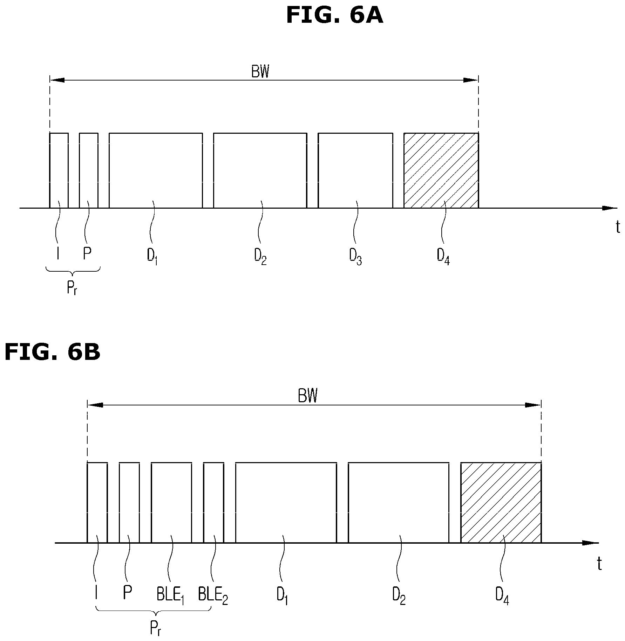

FIGS. 6A and 6B are views illustrating examples in which the controller controls the communication unit in response to the error that may be generated in FIG. 3A.

As illustrated in FIG. 3A, when the data transmission of which bandwidth exceeds the available bandwidth is performed such that the communication unit 100 is connected to a plurality of slave devices (S), an error may occur. In this case, the controller 200 may control the communication unit 100 so that the communication unit 100 stops performing the pre-communication (Pr) with an adjacent slave device (S) that is connectable.

For example, the controller 200 may determine an amount in excess of the bandwidth by the data transmission of the communication unit 100. In the exemplary embodiment of FIG. 3A, an excessive amount is determined as 15 % of the bandwidth because the entire bandwidth occupancy rate may become 115 %. Accordingly, the controller 200 may stop performing a part of the pre-communication (Pr) to secure a time slot corresponding to the excessive amount of the bandwidth. For example, the controller 200 may stop performing an operation of BLE scan and an operation of BLE advertisement to release the occupancy of the time slot BLE1 that is 10 % of the bandwidth and the time slot BLE2 that is 5 %.

Referring to FIG. 6A, 15 % of the bandwidth may be secured since the operations of BLE scan and BLE advertisement are not performed in the pre-communication (Pr), and thus a time slot D4 that is 20 % of the bandwidth may be assigned to perform the communication with the slave device S4. Accordingly, the communication unit 100 may communicate with the slave devices S1 to S4 without the buffering.

In another exemplary embodiment, the controller 200 may control the communication unit 100 so that the communication unit 100 blocks a connection to a part of the slave device (S) in the connection state.

For example, the controller 200 may determine an amount in excess of the bandwidth by the data transmission of the communication unit 100, and block a connection to the part of the slave device (S) to secure a time slot corresponding to the excessive amount of the bandwidth. In the exemplary embodiment of FIG. 3A, the excessive amount is determined as 15 % of the bandwidth. In this case, the controller 200 may block a connection to the slave device S3 to release the occupancy of the time slot D3 that is 20 % of the bandwidth.

Referring to FIG. 6B, 20 % of the bandwidth may be secured since the connection to the slave device S3 is blocked, and thus a time slot D4 that is 20 % of the bandwidth may be assigned to perform the communication with the slave device S4. Accordingly, the communication unit 100 may communicate with the slave devices S1 to S4 without the buffering.

Although it is described above that the slave device S3 that occupies 20 % of the bandwidth, which is closer to the bandwidth of the slave device S4, releases the time slot D3 assigned to the slave device S3, this is merely an example. For example, the communication unit 100 may control to release a greatest bandwidth assigned to one of the plurality of slave devices (S).

The controller 200 may control the display 300 so that the display 300 indicates that the pre-communication (Pr) is stopped in the embodiment of FIG. 6A and/or indicates that the connection to the slave device S3 is blocked.

Although it is described above that the controller 200 controls to stop performing the pre-communication (Pr) or block connection to at least a part of the slave device (S) when it is determined that the data transmission to be performed has a bandwidth that exceeds the available bandwidth, the exemplary embodiments are not limited thereto. For example, the controller 200 may control to stop performing the pre-communication (Pr) or block connection to at least a part of the slave device (S) when it is determined that the data transmission to be performed has a bandwidth that has a certain percentage or more of the available bandwidth. Alternatively, the controller 200 may control to stop performing the pre-communication (Pr) or block connection to at least a part of the slave device (S) when it is determined that the data transmission to be performed has a bandwidth that is equal to or greater than a threshold.

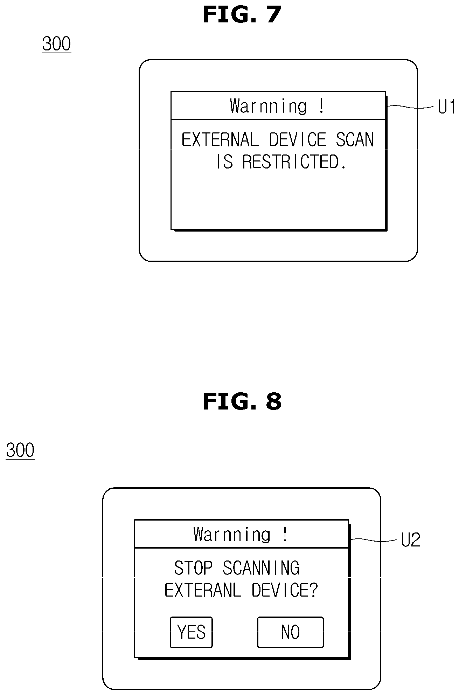

FIG. 7 is a view illustrating a first user interface (UI) displayed on a display in accordance with an exemplary embodiment.

As mentioned above, when the data transmission of which bandwidth exceeds the available bandwidth is to be performed, the controller 200 may control the communication unit 100 so that the communication unit 100 stops performing the pre-communication (Pr). As a result, connecting to the slave device (S) in the connectable state may be restricted. It may cause inconvenience for a user who wants to connect a master device (M) of the user to a new slave device (S).

To relieve the above problem, the controller 200 may control the display 300 so that the display 300 displays the first user interface (UI) indicating that the pre-communication (Pr) is stopped. As illustrated in FIG. 7, when the display 300 displays the first user interface (UI), a user may visually confirm that the pre-communication (Pr) is stopped and thus the user may recognize that connecting to a new slave device (S) is restricted.

Further, when a control command to stop performing the pre-communication (Pr) is input by the user, the controller 200 may perform the control command to stop performing the pre-communication (Pr). To this end, the controller 200 may control the display 300 so that the display 300 displays a second user interface (UI) asking whether to stop the pre-communication (Pr).

FIG. 8 is a view illustrating a second user interface (UI) displayed on the display in accordance with an exemplary embodiment.

When the data transmission of which bandwidth exceeds the available bandwidth is to be performed, the controller 200 may control the display 300 so that the display 300 displays the second user interface (UI) asking whether to stop the pre-communication (Pr).

As illustrated in FIG. 8, when the display 300 displays the second user interface (UI), the user may determine whether to stop the pre-communication (Pr), and input a control command corresponding to the result of the determination via the input unit 400.

The controller 200 may control the communication unit 100 according to the input control command. For example, when the control command to stop the pre-communication (Pr) is input via the input unit 400, the controller 200 may control the communication unit 100 so that the communication unit 100 stops the pre-communication (Pr). On the other hand, when a control command to maintain the pre-communication (Pr) is input via the input unit 400, the controller 200 may maintain the current communication state.

By displaying the second user interface (UI) as described above, the controller 200 may indicate to the user the current communication state while providing a selection to change or maintain the communication environment to the user.

In addition, when a control command to block a connection to a part of the slave device (S) in the connection state is input by the user, the controller 200 may perform the control command. To this end, the controller 200 may control the display 300 so that the display 300 displays a third user interface (UI) allowing the user to select a slave device (S) to block a connection thereof.

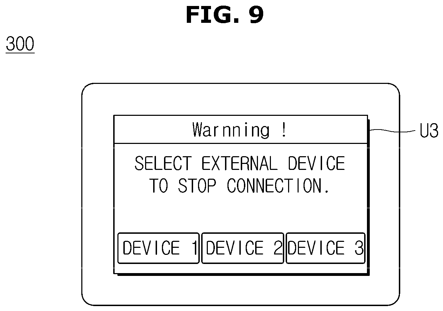

FIG. 9 is a view illustrating an example of a third user interface (UI) displayed on the display in accordance with an exemplary embodiment.

When the data transmission of which bandwidth exceeds the available bandwidth is to be performed, the controller 200 may control the display 300 so that the display 300 displays the third user interface (UI) allowing the user to select a slave device (S) to block a connection thereof.

As illustrated in FIG. 9, when the display 300 displays the third user interface (UI), the user may select at least one of the slave devices (S), and input a control command corresponding to the selection via the input unit 400.

The controller 200 may control the communication unit 100 according to the input control command. For example, when the control command to select at least one slave device (S) is input via the input unit 400, the controller 200 may control the communication unit 100 so that a connection to the selected slave device (S) is blocked.

By displaying the third user interface (UI) as described above, the controller 200 may indicate to the user the current communication state while providing a selection to block the connection to a slave device (S) to the user.

The controller 200 may be implemented in hardware, software, and/or a combination of hardware and software to control the communication unit 100. According to an exemplary embodiment, the controller 200 may be implemented by a processor or a micro-processor. For example, the controller 200 may be a central processing unit (CPU). Alternatively, the controller 200 may operate software per-stored in the storage 500 so that the controller 200 may control the communication unit 100.

In the above descriptions, it is assumed that the master device (M) and the slave device (S) are communicated with each other by employing Bluetooth technology, but the exemplary embodiments are not limited thereto. An electronic apparatus may be communicated with each other via a variety of communication technologies.

For example, the electronic apparatus may perform the communication using Zigbee technology. In this case, the communication unit 100 of the electronic apparatus may perform an energy scan about a pre-determined channel, e.g., energy detection (ED) scan, as a pre-communication (Pr) to participate in a personal area network (PAN) formed by Zigbee. That is, the communication unit 100 may perform the ED scan as the pre-communication (Pr). In addition, the communication unit 100 of the electronic apparatus may serve as a coordinator and may perform beacon frame scan, e.g. active scan, and passive scan, on the PAN, corresponding to the pre-communication (Pr).

In this case, a part of the entire bandwidth may be occupied by the pre-communication (Pr) including the ED scan, the active scan and the passive scan. In addition, the data communication with another electronic apparatus may be performed through the remaining part except for the part occupied by the pre-communication (Pr). When the sum of the bandwidth of the pre-communication (Pr) and the bandwidth of the data communication exceeds the available bandwidth of the communication unit 100, the electronic apparatus that performs the communication using Zigbee technology may stop at least one of the pre-communication (Pr) and the data communication. Similar control methods may apply to the electronic apparatus using Bluetooth technology.

In the above, the master device (M) according to exemplary embodiments is described with reference to FIGS. 1 to 9. The master device (M) according to exemplary embodiments may be implemented by a variety of devices without limitation. According to an exemplary embodiment, the master device (M) may be implemented by, for example, a task top, a lap top, a Personal Digital Assistant (PDA), a tablet personal computer, a Portable Multimedia Player (PMP), a smart phone, and a wearable device.

According to an exemplary embodiment, the master device (M) may be implemented by a display apparatus including a display panel.

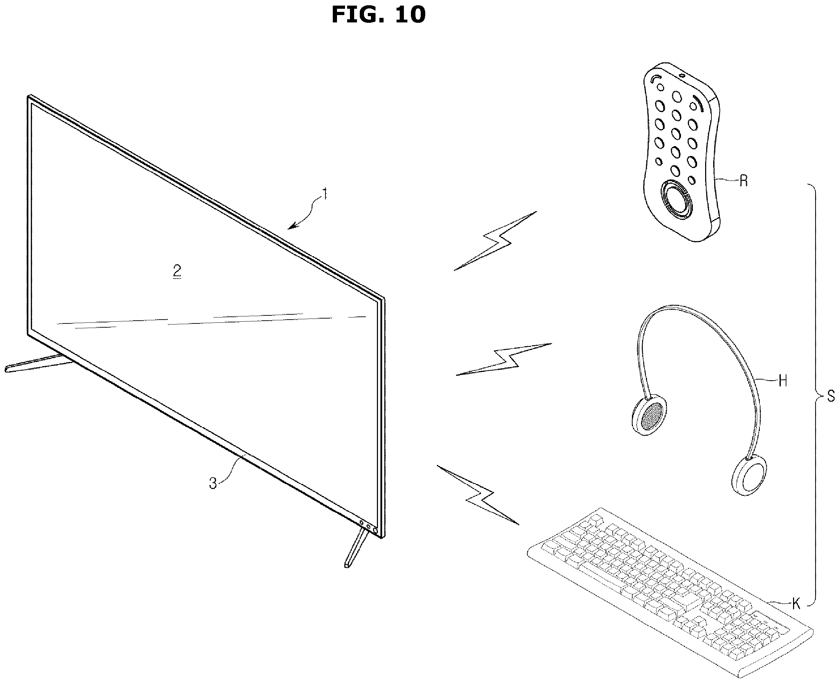

FIG. 10 is a view illustrating an exterior of a display apparatus in accordance with an exemplary embodiment.

The display apparatus 1 may be an apparatus configured to display an image received from an outside, or an image generated by the display apparatus 1 so that a user visually recognizes the image.

As illustrated in FIG. 10, according to an exemplary embodiment, the display apparatus 1 may include a display panel 2 configured to display an image, and a bezel 3 configured to protect an edge of the display panel 2.

The display panel 2 may be implemented by a plurality of pixels, wherein the plurality of pixels may emit a light in a visible ray region. The light emitted from the plurality of pixels may be delivered to user's eyes and thus the user may recognize an image via the display panel 2.

The bezel 3 may fix a position of the display panel 2 so that the display panel 2 stably provides the image to the user. Also, the bezel 3 may prevent the display panel 2 from being damaged.

The bezel 3 may be implemented by a metal having a high durability and/or a synthetic resin.

The display apparatus 1 may include all of components included in the master device (M) of FIG. 1 to be operated as the above mentioned master device (M). In this case, the display 300 of FIG. 1 may be implemented by the display panel 2 of FIG. 10.

According to an exemplary embodiment, the display apparatus 1 may communicate with at least one external device via the communication unit 100. For example, the display apparatus, as a master device (M), may communicate with a slave device (S). For example, the display apparatus 1 may receive an input of a control command via a wireless communication with a remote controller (R). For example, the control command includes a channel selection, a volume control, and a power control. In addition, the display apparatus 1 may communicate with a headphone (H) via the wireless communication, and then output a sound via the headphone (H), wherein the sound corresponds to an image output via the display panel 2. Further, the display apparatus 1 may receive an input of a command via the wireless communication with a keyboard (K), wherein the command may include, for example, a direction input (e.g., an input relating to a direction to which a cursor is moved), and a text input.

According to an exemplary embodiment, the slave device (S) connectable to the display apparatus 1 may be not limited to the device disclosed in FIG. 10.

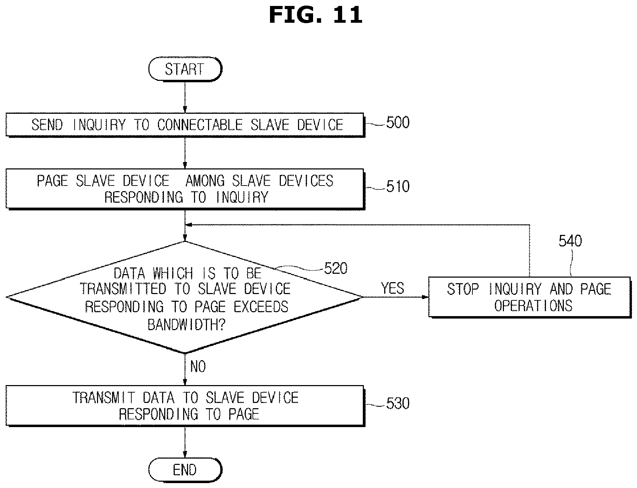

FIG. 11 is a flow chart illustrating a control method of a master device in accordance with an exemplary embodiment.

The master device (M) may send an inquiry to an adjacent slave device (S) in a connectable state (500). Particularly, the communication unit 100 of the master device (M) may repeatedly send an inquiry message including an operation frequency of the master device (M) to the surroundings so that the slave device (S) matches a frequency pattern thereof with that of the master device (M).

Next, the master device (M) may page a slave device (S) among the slave devices (S) that transmit a response to the inquiry (510). For example, the master device (M) may select a slave device (S) among a plurality of slave devices (S) that transmit the response to the inquiry and page the selected slave device (S). The master device (M) may acquire an address of the slave device (S) through the response to the inquiry transmitted from the slave device (S), and the master device (M) may selectively page the slave device (S) to be connected.

Particularly, the communication unit 100 of the master device (M) may transmit a page message including a clock signal of the master device (M) to the slave device (S) so that the slave device (S) is synchronized to an operation clock of the master device (M).

When there is a page response corresponding to the page message, the master device (M) may determine whether a data, which is to be transmitted to the slave device (S), has a bandwidth that exceeds the available bandwidth of the master device (M) (520). The "available bandwidth" may represent a capacity that is transmittable in a single frame.

When the data, which is to be transmitted to the slave device (S), has a bandwidth that exceeds the available bandwidth of the master device (M), the master device (M) may stop sending the inquiry and the page to the slave device (S) (540). After the sending of the inquiry and the page is stopped, the master device (M) may repeatedly determine whether a data, which is to be transmitted to the slave device (S), has a bandwidth that exceeds the available bandwidth of the master device (M).

On the other hand, when the data, which is to be transmitted to the slave device (S), does not have a bandwidth that exceeds the available bandwidth of the master device (M), the master device (M) may transmit the data to the slave device (S) that responds to the page (530).

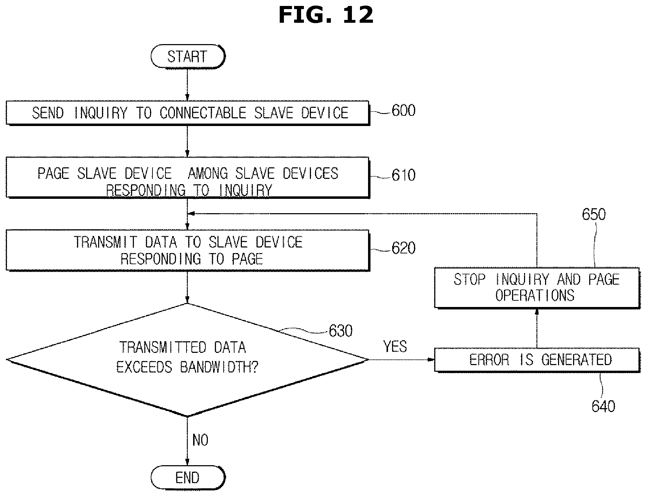

FIG. 12 is a flow chart illustrating a control method of a master device in accordance with another exemplary embodiment.

The master device (M) may send an inquiry to an adjacent slave device (S) in a connectable state (600). Particularly, a communication unit 100 of the master device (M) may repeatedly send an inquiry message including an operation frequency of the master device (M) to the surroundings so that the slave device (S) matches a frequency pattern with that of the master device (M).

Next, the master device (M) may page a slave device (S) among the slave devices (S) that respond to the inquiry (610). The master device (M) may acquire an address of the slave device (S) through the response to the inquiry transmitted from the slave device (S), and thus the master device (M) may selectively page the slave device (S).

Particularly, the communication unit 100 of the master device (M) may transmit a page message including a clock signal of the master device (M) to the slave device (S), which is intended to be connected, so that the slave device (S) is synchronized to an operation clock of the master device (M).

When there is a page response corresponding to the page message, the master device (M) may transmit the data to the slave device (S) (620). Here, the master device (M) may perform a data transmission within a capacity that is transmittable in a single frame, i.e. a bandwidth.

Next, the master device (M) may determine whether the transmitted data has a bandwidth that exceeds the available bandwidth of the master device (M) (630).

When the transmitted data has a bandwidth that exceeds the available bandwidth of the master device (M), the master device (M) may generate an error (640). For example, the master device (M) may generate a communication error in which a normal communication is impossible. When an error is generated, the master device (M) may stop sending the inquiry and the page to the slave device (S) (650). The master device (M) may again transmit the data to the slave device (S) that responds to the page.

On the other hand, when the transmitted data does not have a bandwidth that exceeds the available bandwidth, the master device (M) may terminate the process. According to the electronic apparatus and the control method of the electronic apparatus according to exemplary embodiments, it may be possible to provide an environment allowing the electronic apparatus to perform a data communication with a plurality of external devices connected thereto, without buffering.

In addition, since the number of external device in a connectable state is increased due to the efficient management of bandwidth (BW), it may be possible to provide more functions to a user.

The apparatuses according to exemplary embodiments may comprise a memory to store program data, a processor to execute the program data, a permanent storage unit such as a disk drive, a communication port to handle communications with external devices, and user interface devices, including a touch panel, keys, buttons, etc. When software modules or algorithms are involved, the software modules or algorithms may be stored as program instructions and/or computer readable codes executable on a processor, in a computer-readable medium. Examples of the computer readable recording medium include magnetic storage media (e.g., read-only memories (ROMs), random-access memories (RAMs), floppy disks, hard disks, etc.), and optical recording media (e.g., compact disk (CD)-ROMs, or digital versatile disks (DVDs)). The computer readable recording medium can also be distributed over network coupled computer systems so that the computer readable code is stored and executed in a distributive manner. This media can be read by the computer, stored in the memory, and executed by the processor.

Exemplary embodiments may be described in terms of functional block components and/or various processing steps. Such functional blocks may be realized by any number of hardware and/or software components configured to perform the specified functions. For example, exemplary embodiments may employ various integrated circuit (IC) components, e.g., memory elements, processing elements, logic elements, look-up tables, and the like, which may carry out a variety of functions under the control of one or more microprocessors or other control devices. Similarly, where the elements are implemented using software programming or software elements, the exemplary embodiments may be implemented with any programming or scripting language such as C, C++, Java, assembler language, or the like, with the various algorithms being implemented with any combination of data structures, objects, processes, routines or other programming elements. Functional aspects may be implemented in algorithms that are executed on one or more processors. Furthermore, the exemplary embodiments may employ any number of conventional techniques for electronics configuration, signal processing and/or control, data processing and the like. The words "mechanism," "element," "means," and "configuration" are used broadly and are not limited to mechanical or physical embodiments, but may include software routines in conjunction with processors, etc.

At least one of the components, elements, modules or units represented by a block as illustrated in the drawings may be embodied as various numbers of hardware, software and/or firmware structures that execute respective functions described above, according to an exemplary embodiment. For example, at least one of these components, elements or units may use a direct circuit structure, such as a memory, a processor, a logic circuit, a look-up table, etc. that may execute the respective functions through controls of one or more microprocessors or other control apparatuses. Also, at least one of these components, elements or units may be specifically embodied by a module, a program, or a part of code, which contains one or more executable instructions for performing specified logic functions, and executed by one or more microprocessors or other control apparatuses. Also, at least one of these components, elements or units may further include or implemented by a processor such as a central processing unit (CPU) that performs the respective functions, a microprocessor, or the like. Two or more of these components, elements or units may be combined into one single component, element or unit which performs all operations or functions of the combined two or more components, elements of units. Also, at least part of functions of at least one of these components, elements or units may be performed by another of these components, element or units. Further, although a bus is not illustrated in the above block diagrams, communication between the components, elements or units may be performed through the bus. Functional aspects of the above exemplary embodiments may be implemented in algorithms that execute on one or more processors. Furthermore, the components, elements or units represented by a block or processing steps may employ any number of related art techniques for electronics configuration, signal processing and/or control, data processing and the like.

Although a few embodiments have been shown and described, it would be appreciated by those skilled in the art that changes may be made in these embodiments without departing from the principles of the invention, the scope of which is defined in the claims.

## Claims

1. An electronic apparatus to perform wireless communication with a plurality of external devices, the electronic apparatus comprising:
a communication unit (100) configured to perform a pre-communication (Pr) with a first external device in a connectable state, and configured to perform a data communication with a second external device in a connection state, based on an available bandwidth in a frame; and
a controller (200) configured to control the communication unit (100) so that the communication unit (100) stops performing at least one of the pre-communication and the data communication, when the sum of the bandwidth to perform the pre-communication and the bandwidth to perform the data communication exceeds the available bandwidth.

2. The electronic apparatus of claim 1, wherein
the communication unit divides the available bandwidth into a plurality of time slots, and assigns the plurality of time slots so that the pre-communication and the data communication occupy the plurality of time slots.

3. The electronic apparatus of claim 2, wherein
the communication unit determines a number of the plurality of time slots assigned according to a packet type selected by the second external device in the connection state.

4. The electronic apparatus of claim 2 or 3, wherein
when a part of the pre-communication and the data communication is not assigned to a time slot, the controller controls the communication unit so that the communication unit stops the at least one of the pre-communication and the data communication, and reassigns a time slot, which is previously assigned to the at least one of the stopped pre-communication and data communication, to the at least a part of the pre-communication and the data communication, which is not assigned the time slot.

5. The electronic apparatus of any one of claims 1 to 4, wherein
the pre-communication comprises at least one of inquiry, page, scan and advertisement of the first external device in the connectable state, and the controller controls the communication unit so that the communication unit stops performing at least a part of the pre-communication when the sum of the bandwidth to perform the pre-communication and the bandwidth to perform the data communication exceeds the available bandwidth.

6. The electronic apparatus of any one of the preceding claims, wherein the second external device comprises a plurality of second external devices, and the controller controls the communication unit so that the communication unit stops performing the data communication with respect to at least one second external device among the plurality of second external devices when the sum of the bandwidth to perform the pre-communication and bandwidth to perform the data communication exceeds the available bandwidth.

7. The electronic apparatus of any one of the preceding claims, wherein
the controller determines whether to stop performing the at least one of the pre-communication and the data communication according to a control command input from the outside, when the sum of the bandwidth to perform the pre-communication and the bandwidth to perform the data communication exceeds the available bandwidth.

8. The electronic apparatus of any one of the preceding claims, further comprising:
a display configured to indicate that the at least one of the pre-communication and the data communication is stopped when the at least one of the pre-communication and the data communication is stopped.

9. A control method of an electronic apparatus configured to perform wireless communication with a plurality of external devices, and configured to perform a pre-communication (Pr) with a first external device in a connectable state and a data communication with a second external device in a connection state, based on an available bandwidth in a frame, the control method comprising:
stopping performing at least one of the pre-communication and the data communication when a sum of the bandwidth to perform the pre-communication and the bandwidth to perform the data communication exceeds the available bandwidth.

10. The control method of claim 9, comprising:
dividing the available bandwidth into a plurality of time slots; and assigning the plurality of time slots so that the pre-communication and the data communication occupy the plurality of time slots.

11. The control method of claim 10, wherein
the assignment of the plurality of time slots determines a number of the plurality of time slots assigned according to a packet type selected by the external device in the connection state.

12. The control method of claim 10 or 11, wherein
the stop of performing the at least one of the pre-communication and the data communication further comprises stopping performing the at least one of the pre-communication and the data communication when at least a part of the pre-communication and the data communication is not assigned the time slot.

13. The control method of any one of claims 9 to 12, wherein
the pre-communication comprises at least one of inquiry, page, scan and advertisement of the first external device in the connectable state, and the stop of performing the at least one of the pre-communication and the data communication stops performing a part of the pre-communication when the sum of the bandwidth to perform the pre-communication and the bandwidth to perform the data communication exceeds the available bandwidth.

14. The control method of any one of claims 9 to 13, wherein:
the second external device comprises a plurality of second external devices and the stop of performing the at least one of the pre-communication and the data communication stops performing the data communication with respect to at least one of second external device among the plurality of second external devices when the sum of the bandwidth to perform the pre-communication and the bandwidth to perform the data communication exceeds the available bandwidth.

15. The control method of any one of claims 11 to 14, wherein
the stop of the at least one of the pre-communication and the data communication comprises receiving an input of a control command related to whether to stop the at least one of the pre-communication and the data communication when the sum of the bandwidth to perform the pre-communication and the bandwidth to perform the data communication exceeds the available bandwidth; and stopping performing the at least one of the pre-communication and the data communication based on the input of the control command.

## Patentansprüche

1. Elektronische Vorrichtung zum Durchführen von drahtloser Kommunikation mit mehreren externen Geräten, wobei die elektrische Vorrichtung Folgendes umfasst:
eine Kommunikationseinheit (100), konfiguriert zum Durchführen einer Vorkommunikation (Pr) mit einem ersten externen Gerät in einem anschlussfähigen Zustand und konfiguriert zum Durchführen einer Datenkommunikation mit einem zweiten externen Gerät in einem Anschlusszustand auf der Basis einer verfügbaren Bandbreite in einem Frame; und
eine Steuerung (200), konfiguriert zum Steuern der Kommunikationseinheit (100), so dass die Kommunikationseinheit (100) die Durchführung der Vorkommunikation und/oder der Datenkommunikation stoppt, wenn die Summe der Bandbreite zum Durchführen der Vorkommunikation und der Bandbreite zum Durchführen der Datenkommunikation die verfügbare Bandbreite übersteigt.

2. Elektronische Vorrichtung nach Anspruch 1, wobei
die Kommunikationseinheit die verfügbare Bandbreite in mehrere Zeitschlitze unterteilt und die mehreren Zeitschlitze so zuweist, dass die Vorkommunikation und die Datenkommunikation die mehreren Zeitschlitze einnehmen.

3. Elektronische Vorrichtung nach Anspruch 2, wobei
die Kommunikationseinheit eine Anzahl der gemäß einem Pakettyp zugewiesenen mehreren Zeitschlitze bestimmt, ausgewählt vom zweiten externen Gerät im Anschlusszustand.

4. Elektronische Vorrichtung nach Anspruch 2 oder 3, wobei
die Steuerung, wenn ein Teil der Vorkommunikation und der Datenkommunikation keinem Zeitschlitz zugewiesen ist, die Kommunikationseinheit so steuert, dass die Kommunikationseinheit die Vorkommunikation und/oder die Datenkommunikation stoppt und einen zuvor der gestoppten Vorkommunikation und/oder Datenkommunikation zugewiesenen Zeitschlitz wenigstens einem Teil der Vorkommunikation und der Datenkommunikation neu zuweist, der dem Zeitschlitz nicht zugewiesen ist.

5. Elektronische Vorrichtung nach einem der Ansprüche 1 bis 4, wobei
die Vorkommunikation wenigstens eines aus Anfrage, Seite, Scan und Annoncierung des ersten externen Geräts im anschlussfähigen Zustand umfasst und die Steuerung die Kommunikationseinheit so steuert, dass die Kommunikationseinheit die Durchführung wenigstens eines Teils der Vorkommunikation stoppt, wenn die Summe aus der Bandbreite zum Durchführen der Vorkommunikation und der Bandbreite zum Durchführen der Datenkommunikation die verfügbare Bandbreite übersteigt.

6. Elektronische Vorrichtung nach einem der vorherigen Ansprüche, wobei das zweite externe Gerät mehrere zweite externe Geräte umfasst und die Steuerung die Kommunikationseinheit so steuert, dass die Kommunikationseinheit die Durchführung der Datenkommunikation mit Bezug auf wenigstens ein zweites externes Gerät unter den mehreren zweiten externen Geräten stoppt, wenn die Summe aus der Bandbreite zum Durchführen der Vorkommunikation und der Bandbreite zum Durchführen der Datenkommunikation die verfügbare Bandbreite übersteigt.

7. Elektronische Vorrichtung nach einem der vorherigen Ansprüche, wobei
die Steuerung anhand eines Steuerbefehlseingangs von außen feststellt, ob die Durchführung der Vorkommunikation und/oder der Datenkommunikation gestoppt werden soll, wenn die Summe aus der Bandbreite zum Durchführen der Vorkommunikation und der Bandbreite zum Durchführen der Datenkommunikation die verfügbare Bandbreite übersteigt.

8. Elektronische Vorrichtung nach einem der vorherigen Ansprüche, die ferner Folgendes umfasst:
ein Display, konfiguriert zum Anzeigen, dass die Vorkommunikation und/oder die Datenkommunikation gestoppt wird, wenn die Vorkommunikation und/oder die Datenkommunikation gestoppt wird/werden.

9. Steuerverfahren einer elektronischen Vorrichtung, konfiguriert zum Durchführen von drahtloser Kommunikation mit mehreren externen Geräten und konfiguriert zum Durchführen einer Vorkommunikation (Pr) mit einem ersten externen Gerät in einem anschlussfähigen Zustand und einer Datenkommunikation mit einem zweiten externen Gerät in einem Anschlusszustand, auf der Basis einer verfügbaren Bandbreite in einem Frame, wobei das Steuerverfahren Folgendes beinhaltet:
Stoppen der Durchführung der Vorkommunikation und/oder der Datenkommunikation, wenn eine Summe aus der Bandbreite zum Durchführen der Vorkommunikation und der Bandbreite zum Durchführen der Datenkommunikation die verfügbare Bandbreite übersteigt.

10. Steuerverfahren nach Anspruch 9, das Folgendes beinhaltet:
Unterteilen der verfügbaren Bandbreite in mehrere Zeitschlitze; und Zuweisen der mehreren Zeitschlitze so, dass die Vorkommunikation und die Datenkommunikation die mehreren Zeitschlitze einnehmen.

11. Steuerverfahren nach Anspruch 10, wobei
die Zuweisung der mehreren Zeitschlitze eine Anzahl der gemäß einem Pakettyp zugewiesenen mehreren Zeitschlitze bestimmt, ausgewählt durch das externe Gerät im Anschlusszustand.

12. Steuerverfahren nach Anspruch 10 oder 11, wobei
das Stoppen der Durchführung der Vorkommunikation und/oder der Datenkommunikation ferner das Stoppen der Durchführung der Vorkommunikation und/oder der Datenkommunikation beinhaltet, wenn wenigstens ein Teil der Vorkommunikation und der Datenkommunikation keinem Zeitschlitz zugewiesen ist.

13. Steuerverfahren nach einem der Ansprüche 9 bis 12, wobei
die Vorkommunikation wenigstens eines aus Anfrage, Seite, Scan und Annoncierung des ersten externen Geräts im anschlussfähigen Zustand umfasst, und das Stoppen der Durchführung der Vorkommunikation und/oder der Datenkommunikation die Durchführung eines Teils der Vorkommunikation stoppt, wenn die Summe aus der Bandbreite zum Durchführen der Vorkommunikation und der Bandbreite zum Durchführen der Datenkommunikation die verfügbare Bandbreite übersteigt.

14. Steuerverfahren nach einem der Ansprüche 9 bis 13, wobei:
das zweite externe Gerät mehrere zweite externe Geräte umfasst, und das Stoppen der Durchführung der Vorkommunikation und/oder der Datenkommunikation das Durchführen der Datenkommunikation mit Bezug auf wenigstens ein zweites externes Gerät unter den mehreren zweiten externen Geräten stoppt, wenn die Summe aus der Bandbreite zum Durchführen der Vorkommunikation und der Bandbreite zum Durchführen der Datenkommunikation die verfügbare Bandbreite übersteigt.

15. Steuerverfahren nach einem der Ansprüche 11 bis 14, wobei
das Stoppen der Vorkommunikation und/oder der Datenkommunikation das Empfangen eines Eingangs eines Steuerbefehls in Bezug darauf beinhaltet, ob die Vorkommunikation und/oder die Datenkommunikation gestoppt werden soll, wenn die Summe aus der Bandbreite zum Durchführen der Vorkommunikation und der Bandbreite zum Durchführen der Datenkommunikation die verfügbare Bandbreite übersteigt; und Stoppen der Durchführung der Vorkommunikation und/oder der Datenkommunikation auf der Basis des Eingangs des Steuerbefehls.

## Revendications

1. Appareil électronique destiné à réaliser une communication sans fil avec une pluralité de dispositifs externes, l'appareil électronique comprenant :
une unité de communication (100) conçue pour réaliser une pré-communication (Pr) avec un premier dispositif externe dans un état connectable, et conçue pour réaliser une communication de données avec un second dispositif externe dans un état de connexion, sur la base d'une bande passante disponible dans une trame ; et
un contrôleur (200) conçu pour contrôler l'unité de communication (100) de sorte que l'unité de communication (100) arrête de réaliser la pré-communication et/ou la communication de données, quand la somme de la bande passante pour réaliser la pré-communication et de la bande passante pour réaliser la communication de données dépasse la bande passante disponible.

2. Appareil électronique selon la revendication 1, dans lequel :
l'unité de communication divise la bande passante disponible en une pluralité de créneaux temporels, et affecte la pluralité de créneaux temporels de sorte que la pré-communication et la communication de données occupent la pluralité de créneaux temporels.

3. Appareil électronique selon la revendication 2, dans lequel :
l'unité de communication détermine un certain nombre de créneaux temporels parmi la pluralité de créneaux temporels affectés selon un type de paquet sélectionné par le second dispositif externe dans l'état de connexion.

4. Appareil électronique selon la revendication 2 ou 3, dans lequel :
quand une partie de la pré-communication et de la communication de données n'est pas affectée à un créneau temporel, le contrôleur contrôle l'unité de communication de sorte que l'unité de communication arrête la pré-communication et/ou la communication de données, et réaffecte un créneau temporel, précédemment affecté à la pré-communication et/ou à la communication de données arrêtées, à l'au moins une partie de la pré-communication et de la communication de données, à laquelle le créneau temporel n'est pas affecté.

5. Appareil électronique selon l'une quelconque des revendications 1 à 4, dans lequel :
la pré-communication comprend une requête, une page, une analyse et/ou une annonce du premier dispositif externe dans l'état connectable, et le contrôleur contrôle l'unité de communication de sorte que l'unité de communication arrête de réaliser au moins une partie de la pré-communication quand la somme de la bande passante pour réaliser la pré-communication et de la bande passante pour réaliser la communication de données dépasse la bande passante disponible.

6. Appareil électronique selon l'une quelconque des revendications précédentes, dans lequel :
le second dispositif externe consiste en une pluralité de seconds dispositifs externes, et le contrôleur contrôle l'unité de communication de sorte que l'unité de communication arrête de réaliser la communication de données par rapport à au moins un second dispositif externe parmi la pluralité de seconds dispositifs externes quand la somme de la bande passante pour réaliser la pré-communication et de la bande passante pour réaliser la communication de données dépasse la bande passante disponible.

7. Appareil électronique selon l'une quelconque des revendications précédentes, dans lequel :
le contrôleur détermine s'il faut arrêter de réaliser la pré-communication et/ou la communication de données selon une commande de contrôle entrée de l'extérieur, quand la somme de la bande passante pour réaliser la pré-communication et de la bande passante pour réaliser la communication de données dépasse la bande passante disponible.

8. Appareil électronique selon l'une quelconque des revendications précédentes, comprenant en outre :
un écran conçu pour indiquer que la pré-communication et/ou la communication de données sont arrêtées quand la pré-communication et/ou la communication de données sont arrêtées.

9. Procédé de contrôle d'un appareil électronique conçu pour réaliser une communication sans fil avec une pluralité de dispositifs externes, et conçu pour réaliser une pré-communication (Pr) avec un premier dispositif externe dans un état connectable, et une communication de données avec un second dispositif externe dans un état de connexion, sur la base d'une bande passante disponible dans une trame, le procédé de contrôle consistant à :
arrêter de réaliser la pré-communication et/ou la communication de données quand une somme de la bande passante pour réaliser la pré-communication et de la bande passante pour réaliser la communication de données dépasse la bande passante disponible.

10. Procédé de contrôle selon la revendication 9, consistant à :
diviser la bande passante disponible en une pluralité de créneaux temporels ; et affecter la pluralité de créneaux temporels de sorte que la pré-communication et la communication de données occupent la pluralité de créneaux temporels.

11. Procédé de contrôle selon la revendication 10, dans lequel :
l'affectation de la pluralité de créneaux temporels détermine un certain nombre de créneaux temporels parmi la pluralité de créneaux temporels affectés selon un type de paquet sélectionné par le dispositif externe dans l'état de connexion.

12. Procédé de contrôle selon la revendication 10 ou 11, dans lequel :
l'arrêt de la réalisation de la pré-communication et/ou de la communication de données consiste en outre à arrêter de réaliser la pré-communication et/ou la communication de données quand au moins une partie de la pré-communication et de la communication de données ne s'est pas vue affecter le créneau temporel.

13. Procédé de contrôle selon l'une quelconque des revendications 9 à 12, dans lequel :
la pré-communication comprend au moins une requête, une page, une analyse et une annonce du premier dispositif externe dans l'état connectable, et l'arrêt de la réalisation de la pré-communication et/ou de la communication de données arrête de réaliser une partie de la pré-communication quand la somme de la bande passante pour réaliser la pré-communication et de la bande passante pour réaliser la communication de données dépasse la bande passante disponible.

14. Procédé de contrôle selon l'une quelconque des revendications 9 à 13, dans lequel :
le second dispositif externe consiste en une pluralité de seconds dispositifs externes, et l'arrêt de la réalisation de la pré-communication et/ou de la communication de données arrête de réaliser la communication de données par rapport à au moins un second dispositif externe parmi la pluralité de seconds dispositifs externes quand la somme de la bande passante pour réaliser la pré-communication et de la bande passante pour réaliser la communication de données dépasse la bande passante disponible.

15. Procédé de contrôle selon l'une quelconque des revendications 11 à 14, dans lequel :
l'arrêt de la pré-communication et/ou de la communication de données consiste à recevoir une entrée d'une commande de contrôle relative à l'éventuel arrêt de la pré-communication et/ou de la communication de données quand la somme de la bande passante pour réaliser la pré-communication et de la bande passante pour réaliser la communication de données dépasse la bande passante disponible ; et à arrêter de réaliser la pré-communication et/ou la communication de données sur la base de l'entrée de la commande de contrôle.
